(19) Europäisches Patentamt
European Patent Office
Office européen des brevets

(11) **EP 2 676 775 B1**

(12) **EUROPÄISCHE PATENTSCHRIFT**

(45) Veröffentlichungstag und Bekanntmachung des Hinweises auf die Patenterteilung:
**24.07.2019   Patentblatt 2019/30**

(51) Int Cl.:
**B25J 9/16** (2006.01)

(21) Anmeldenummer: **13003132.1**

(22) Anmeldetag: **19.06.2013**

(54) **Vorgabe synchronisierter Roboterbewegungen**

Setting of synchronised robot movements

Prédétermination de mouvements de robot synchronisés

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.06.2012   DE 102012012184**

(43) Veröffentlichungstag der Anmeldung:
**25.12.2013   Patentblatt 2013/52**

(73) Patentinhaber: **KUKA Deutschland GmbH
86165 Augsburg (DE)**

(72) Erfinder:
 • **Wiedemann, Günther
  86368 Gersthofen (DE)**
 • **Huettenhofer, Manfred
  86406 Meitingen (DE)**
 • **Deller, Stefanie
  86167 Augsburg (DE)**
 • **Hagenauer, Andreas
  86316 Friedberg (DE)**

 • **Weiss, Martin
  86459 Margertshausen (DE)**

(74) Vertreter: **Schlotter, Alexander Carolus Paul et al
Wallinger Ricker Schlotter Tostmann
Patent- und Rechtsanwälte Partnerschaft mbB
Zweibrückenstrasse 5-7
80331 München (DE)**

(56) Entgegenhaltungen:
**US-A- 4 663 726          US-A- 5 254 923
US-A1- 2004 199 290**

 • **CHRISTINA BREDIN: "Team-matesABB MultiMove functionality heralds a new era in robot applications", INTERNET CITATION, 1. Januar 2005 (2005-01-01), Seiten 26-29, XP002536178, Gefunden im Internet:
URL:http://search.abb.com/library/Download .aspx?DocumentID=9AKK100580A1908&Language C
ode=en&DocumentPartID=&Action=Launch&Inc lu deExternalPublicLimited=True [gefunden am 2009-07-09]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Computerprogramm und ein Verfahren zum globalen Vorgeben synchronisierter Roboterbewegungen, einen Computer zur Ausführung des Computerprogramms sowie ein Speichermedium, auf dem das Computerprogramm gespeichert ist.

Insbesondere aus Prozessgründen kann es zweckmäßig oder notwendig sein, dass zwei oder mehr Roboter zum selben Zeitpunkt vorgegebene Posen einnehmen, beispielsweise, um gemeinsam ein Werkstück handzuhaben, insbesondere zu bearbeiten, etwa einander zu übergeben.

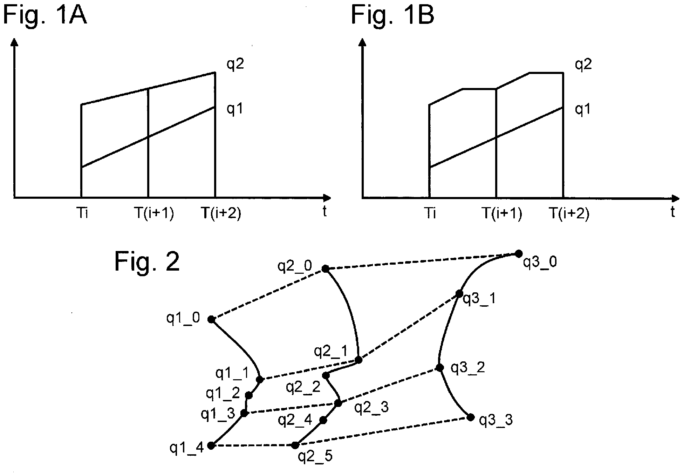

Fig. 1 zeigt hierzu ein betriebsintern bekanntes Prinzip zu einer entsprechenden Synchronisierung zweier Roboter, beschrieben durch ihre Gelenkkoordinaten q1 bzw. q2. Dabei verfährt der langsamere Roboter 1, ausgehend von einer früheren Pose q1(Ti), mit maximalen Geschwindigkeiten oder Beschleunigung in eine vorgegebene spätere Pose q1(T(i+1)). Hieraus ergibt sich die erforderliche Verfahrzeit $\Delta T = T(i+1) - Ti$. Damit die beiden Roboter in einem Zeitpunkt die synchronisierten Posen q1(T(i+1)) und q2(T(i+1)) einnehmen, kann entweder der schnellere Roboter in der Verfahrzeit langsam, d.h. ohne Ausnutzung seiner maximalen Geschwindigkeiten oder Beschleunigung verfahren werden (Fig. 1A) - hierbei ergibt sich seine Geschwindigkeit aus der Posendifferenz q2(Ti+1)) - q2(Ti) und der für den langsameren Roboter 1 erforderlichen Verfahrzeit $\Delta T$ - oder seinerseits mit seiner maximalen Geschwindigkeit oder Beschleunigung verfahren und die restliche Zeit auf den langsameren Roboter warten (Fig. 1B). Diese Prozedur kann sukzessive wiederholt werden, um während einer Bewegung mehrere aufeinanderfolgende Posen zu synchronisieren.

Aufgrund dieses abschnittsweisen, vorwärtsschreitenden Ansatz ist bisher bei bekannten Programmiermitteln zum Vorgeben synchronisierter Bewegungen zwingend eine strikt bijektive 1:1-Zuordnung von Posen der Roboter vorgesehen: jeder vorgegebenen Pose einer Bewegung eines Roboters muss eine Pose der Bewegung des anderen Roboters zugeordnet werden.

Soll nun beispielsweise zwischen zwei synchronisierten Posen für einen Roboter eine weitere Pose vorgegeben werden, etwa zur Kollisionsvermeidung, muss daher entsprechend auch für den anderen Roboter eine - eigentlich unnötige - Dummy-Pose vorgegeben und mit dieser synchronisiert werden. Dies ist nicht nur aufwändig und fehleranfällig, sondern schränkt auch die Flexibilität des anderen Roboters unnötig ein, beispielsweise die Möglichkeit, seine Bewegung zur Optimierung zu variieren.

Aus der US 2004/0199290 A1 ist ein System und ein Verfahren zum Steuern von Robotern bekannt. In einer Ausführung bewegt ein Roboter R1 ein Werkstück längs einer vorgegebenen Bahn. Ein Roboter R2, der ein Schweißwerkzeug führt, sendet eine Nachricht an R1, woraufhin R1 zyklisch Positionen an R2 meldet. Daraufhin wird eine Bewegung aus einer Stillstandsposition Pstart zu einer Position geplant und ausgeführt, die relativ zum vom Roboter R1 geführten Werkstück definiert ist und in der das vom Roboter R2 geführte Schweißwerkzeug relativ zum Werkstück ruht.

Aufgabe der vorliegenden Erfindung ist es, ein Vorgeben synchronisierter Roboterbewegungen zu verbessern.

Diese Aufgabe wird durch ein Computerprogramm mit den Merkmalen des Anspruchs 1 gelöst. Anspruch 7 stellt ein Verfahren unter Schutz, das mittels eines solchen Computerprogramms durchgeführt wird, Anspruch 8 einen Computer, der zur Ausführung eines hier beschriebenen Computerprogramms eingerichtet ist, und . Anspruch 9 ein Speichermedium, auf dem ein hier beschriebenen Computerprogramm gespeichert ist. Die Unteransprüche betreffen vorteilhafte Weiterbildungen.

Ein Programmiermittel im Sinne der vorliegenden Erfindung kann hard- und/oder softwaretechnisch ausgebildet sein. Es umfasst ein Computerprogramm oder einen Computer, der zur Ausführung eines solchen Programms eingerichtet ist, oder ein flüchtiges oder nicht-flüchtiges Speichermedium, insbesondere einen Datenträger, auf dem ein solches Programm gespeichert ist, umfassen. Das Programmiermittel kann insbesondere durch ein entsprechendes Lexikon bzw. eine Syntax von zur Verfügung gestellten Befehlen bzw. Eingabemöglichkeiten entsprechend eingerichtet sein.

Durch das Programmiermittel kann eine Bewegung einer Roboterachsanordnung und eine Bewegung einer oder mehrerer weiterer Roboterachsanordnungen vorgegeben werden.

Unter einer Roboterachse wird vorliegend insbesondere eine Gelenkachse eines Roboters, insbesondere eine Drehachse, und eine kartesische Achse bzw. eine Bewegungsachse im Arbeitsraum eines Roboters verstanden. Eine (weitere) Roboterachsanordnung im Sinne der vorliegenden Erfindung kann eine oder mehrere Roboterachsen eines oder mehrerer Roboter umfassen. In einer Weiterbildung umfasst eine (weitere) Roboterachsanordnung eine oder mehrere vordere Achsen eines Roboters, eine andere (weitere) Roboterachsanordnung eine oder mehrere hintere Achsen dieses Roboters, bezogen jeweils auf die durch den Roboter gebildete kinematische Kette ausgehend von einer Roboterbasis. So kann in einer Weiterbildung eine (weitere) Roboterachsanordnung eine oder mehrere Handachsen (hintere Achsen) eines Roboters, insbesondere seine vierte, fünfte und/oder sechste Achse, umfassen, eine andere (weitere) Roboterachsanordnung seine kartesischen bzw. Lageachsen, insbesondere seine erste, zweite und/oder dritte Achse (vordere Achsen). Insbesondere hierdurch kann in einer Ausführung eine Roboterachsanordnung, die eine Orientierung eines TCPs darstellt, mit einer Roboterachsanordnung synchronisiert werden, die eine Lage des TCPs darstellt. Zusätzlich oder alternativ kann eine (weitere) Roboterachsanordnung eine oder mehrere Zusatzachsen eines Roboters, insbesondere eine siebte oder weitere Achse, umfassen, insbesondere sein. Nach einer Ausführung der vorliegenden Erfindung entsprechend dem einleitenden Anwendungsbeispiel kann eine (weitere) Roboterachsanordnung auch ein Roboter sein, eine andere (weitere) Roboterachsanordnung ein anderer Roboter. Insbesondere können mehr als zwei Roboterachsanordnungen, insbesondere Roboter, synchronisiert werden.

Unter einer Vorgabe einer Bewegung wird insbesondere das Erstellen, Modifizieren, Speichern, Übersetzen, Übertragen an eine Steuerung, und/oder Ausführen einer Befehlsfolge verstanden, bei deren Abarbeitung die Roboterachsanordnungen nacheinander vorgegebene Posen einnehmen. In einer Ausführung können die Bewegungen von zwei oder mehr Roboterachsanordnungen zur Ausführung durch bzw. auf eine(r) oder mehrere(n) Steuerungen vorgesehen sein. Beispielsweise können zwei Roboter jeweils durch separate Steuerungen gesteuert werden, wobei die Synchronisierung durch eine entsprechende Vorgabe der Bewegungen und eine Kommunikation der Steuerungen implementiert sein kann.

In einer Ausführung der vorliegenden Erfindung ist vorgesehen, durch das Programmiermittel ein Posenpaar der Bewegung der Roboterachsanordnung und ein Posenpaar der Bewegung wenigstens einer weiteren Roboterachsanordnung zu synchronisieren. Unter einem Posenpaar werden vorliegend insbesondere zwei Posen einer Bewegung einer (weiteren) Roboterachsanordnung verstanden. Zusätzlich können noch weitere Posen miteinander synchronisiert werden, wobei in der Bewegung aufeinanderfolgende Posen jeweils ein Posenpaar im Sinne der vorliegenden Erfindung bilden können, zwischen denen die Bewegungen der beiden Roboterachsanordnungen im Sinne der vorliegenden Erfindung synchronisiert sind.

Erfindungsgemäß ist nun bei dem Verfahren vorgesehen bzw. das Programmiermittel dazu eingerichtet, unter Beibehaltung dieser Synchronisierung wahlweise zwischen einem dieser Posenpaare wenigstens eine weitere Pose vorzugeben, die nicht mit einer weiteren Pose zwischen dem damit synchronisierten Posenpaar synchronisiert ist. Dabei kann insbesondere vorgesehen sein, dass es zwischen dem damit synchronisierten Posenpaar eine entsprechende weitere Pose gar nicht gibt bzw. zwischen dem damit synchronisierten Posenpaar keine weitere Pose vorhanden ist. Gleichermaßen kann insbesondere vorgesehen sein, dass es zwischen dem damit synchronisierten Posenpaar wenigstens eine entsprechende weitere Pose gibt bzw. zwischen dem damit synchronisierten Posenpaar eine oder mehrere weitere Posen vorhanden sind, die aber nicht mit der weiteren Pose synchronisiert ist bzw. werden muss, die wahlweise zwischen dem einem dieser Posenpaare vorgegeben wird bzw. werden kann. Mit anderen Worten sieht die erfindungsgemäße Lösung vor, die bisherige strikt bijektive 1:1-Zuordnung von Posen synchronisierter Bewegungen aufzuheben und eine freie Zuordnung von synchronisierten Posen zuzulassen.

Im Vergleich zur bisher betriebsintern bekannten Praxis kann hierdurch vorteilhafterweise die Bewegung der Roboterachsanordnung(en), in denen erfindungsgemäß keine synchronisierte Pose mehr vorgegeben wird, verbessert, insbesondere flexibel optimiert werden.

Die Erfindung kann in unterschiedlichsten Weisen implementiert sein. So kann in einer Ausführung das bisherige Verfahren entsprechend weitergebildet werden, indem zusätzlich die Möglichkeit, wahlfrei weitere, nicht synchronisierte Posen zwischen synchronen Posenpaaren vorzugeben, vorgesehen wird und anschließend bzw. nach einer solchen Vorgabe jeweils die bisherige Bahn- bzw. Bewegungsplanung komplett von vorne nochmals ausgeführt wird.

In einer Alternative werden hingegen wenigstens eine Bewegung, insbesondere alle Bewegungen miteinander zu synchronisierender Roboterachsanordnungen, global, d.h. nicht wie bisher abschnittsweise vorwärtsschreitend vorgegeben. Dies kann insbesondere auf Basis von Spline-Funktionen erfolgen, insbesondere kubischer oder hermiter Splines. Diese sind zwar in sich abschnittsweise definiert, geben jedoch gleichwohl aufgrund ihrer Übergangsbedingungen die Bewegung als Ganzes bzw. global vor. Entsprechend sind auch andere globale Vorgaben durch andere, ebenfalls insofern global definierte Funktionen oder Relationen, beispielsweise Polynome, denkbar, wenngleich diese im Vergleich zu Spline-Funktionen zu einem Aufschwingen neigen.

Werden eine oder mehrere Bewegungen global vorgegeben, muss bei Vorgabe weiterer, nicht synchronisierter Posen zwischen synchronen Posenpaaren vorteilhafterweise nicht mehr die Bewegungsplanung erneut von Anfang durchlaufen werden.

Eine global vorgegebene Bewegung kann zwischen einer Anfangs- und einer Endpose vorgegeben sein bzw. werden, zwischen denen wahlweise ein oder mehr mit Posenpaaren anderer Bewegungen synchrone Posenpaare und ein oder mehr nicht synchrone Posen vorgegeben werden können. Dabei kann ein Posenpaar, das mit einem Posenpaar einer Bewegung wenigstens einer weiteren Roboterachsanordnung synchronisiert ist, dieser Anfangs- und Endpose entsprechen, d.h. diese Roboterachsanordnungen ihre Bewegungen gemeinsam beginnen und beenden. Gleichermaßen kann ein Posenpaar, das mit einem Posenpaar einer Bewegung wenigstens einer weiteren Roboterachsanordnung synchronisiert ist, zwischen der Anfangs- und Endpose angeordnet sein, d.h. Roboterachsanordnungen ihre Bewegungen nur abschnittsweise synchron miteinander ausführen.

In einer Ausführung ist vorgesehen, wahlweise eine Synchronisation zwischen Posenpaaren der Bewegungen von zwei oder mehr Roboterachsanordnungen zu modifizieren, insbesondere aufzuheben. Zusätzlich oder alternativ kann in einer Ausführung vorgesehen sein, Posen der Bewegungen von zwei oder mehr Roboterachsanordnungen zu synchronisieren, insbesondere, Posen, die zwischen einem Posenpaar angeordnet sind, das mit wenigstens einem Posenpaar einer Bewegung einer anderen Roboterachsanordnung synchronisiert ist. Insbesondere können also, wie vorstehend ausgeführt, unter Beibehaltung einer Synchronisierung von einem (äußeren) Posenpaar der Bewegung einer Roboterachsanordnung und einem (äußeren) Posenpaar der Bewegung wenigstens einer weiteren Roboterachsanordnung wahlweise zwischen einem dieser Posenpaare eine oder mehrere weitere Posen vorgegeben werden, von denen eine oder mehrere dann mit einer weiteren Pose zwischen einem hiermit synchronisierten Posenpaar synchronisiert werden. Mit anderen Worten können zwischen zwei oder mehr miteinander synchronisierten (äußeren) Posenpaaren für eine oder mehrere Bewegungen eine oder mehrere Posen vorgegeben und wahlweise verschiedene dieser Posen mit Posen der Bewegungen der weiteren Roboterachsanordnungen synchronisiert oder auch nicht synchronisiert werden. Dies maximiert die Flexibilität der Vorgabe der Bewegungen und erlaubt vorteilhaft deren weitere Optimierung.

In einer Ausführung können Posen von Bewegungen von zwei oder mehr Roboterachsanordnungen miteinander synchronisiert werden, an denen kein Genauhalt vorgegeben wird. Insbesondere durch einen Wechsel von einer abschnittsweise voranschreitenden zu einer globalen Vorgabe können beliebige Posen dieser Bewegungen miteinander synchronisiert werden, was die Flexibilität weiter erhöht.

Weitere Vorteile und Merkmale ergeben sich aus den Unteransprüchen und den Ausführungsbeispielen. Hierzu zeigt, teilweise schematisiert:

Fig. 1A:    die synchronisierten Bewegungen zweier Roboterachsanordnungen nach einem betriebsintern bekannten Ansatz;

Fig. 1B:    die synchronisierten Bewegungen zweier Roboterachsanordnungen nach einem weiteren betriebsintern bekannten Ansatz; und

Fig. 2:    die synchronisierten Bewegungen dreier Roboterachsanordnungen nach einer Ausführung der vorliegenden Erfindung.

Fig. 1A, 1B zeigen, wie einleitend ausgeführt, die Zeitverläufe von zwei Roboterachsanordnungen, zum einfacheren Verständnis jeweils mit nur einer Roboterachse $q1$ bzw. $q2$, wobei die beiden Achsen zu den Zeitpunkten $T_i$, $T(i+1)$, $T(i+2)$,... synchronisiert sind, d.h. es jeweils (aufeinanderfolgende) Zeiten gibt, in denen die jeweiligen Roboterachsen $q1$, $q2$ vorgegebene Posen aufweisen. In Fig. 1A verfährt die Roboterachse $q2$ langsamer, indem sie für die vorgegebene Bewegung $q2(T(i+1)) - q2(T_i)$ die für die Roboterachse $q1$ erforderliche Verfahrzeit $T(i+1) - T_i$ ausnutzt, in Fig. 1B, indem sie mit maximaler Geschwindigkeit bzw. Beschleunigung fährt und auf die Roboterachse $q1$ wartet.

Fig. 2 zeigt - im Gegensatz zu Fig. 1 nicht über der Zeit, sondern im Gelenkkoordinaten- oder Arbeitsraum - die durch Spline-Funktionen zwischen den Anfangsposen $q1\_0$, $q2\_0$ bzw. $q3\_0$ und den Endposen $q1\_4$, $q2\_5$ bzw. $q3\_3$ vorgegeben sind.

Diese Anfangs- und Endposen bilden miteinander synchronisierte äußere Posenpaare. Durch ein erfindungsgemäßes Programmiermittel bzw. nach einem erfindungsgemäßen Verfahren können auf diesen Spline-Funktionen wahlweise frei weitere Posen vorgegeben werden, beispielsweise die in Fig. 2 eingezeichneten Posen $q1\_1$, $q1\_2$, $q1\_3$, $q2\_1$ bis $q2\_4$ und $q3\_1$, $q3\_2$. Dabei werden die (bezogen auf die äußere Posenpaare) inneren Posen $q1\_1$, $q2\_1$ und $q3\_1$, sowie $q1\_3$, $q2\_3$ und $q3\_2$ nachträglich, beispielsweise durch Befehle wie

$$\text{WITH \$Sync\_Id[] = } Mj$$

mit den identischen Identifieren $Mj$ in allen Bewegungsbefehlsfolgen synchronisiert, während weitere Posen $q1\_2$, $q2\_2$ und $q2\_4$ unter Beibehaltung dieser Synchronisierungen wahlweise zwischen diesen Posenpaaren ($q1\_0$, $q2\_0$, $q3\_0$; $q1\_1$, $q2\_1$, $q3\_1$), ($q1\_1$, $q2\_1$, $q3\_1$; $q1\_3$, $q2\_3$, $q3\_2$) und ($q1\_3$, $q2\_3$, $q3\_2$; $q1\_4$, $q2\_5$, $q3\_3$), insbesondere zwischen den äußeren Posenpaaren ($q1\_0$, $q2\_0$, $q3\_0$; $q1\_4$, $q2\_5$, $q3\_3$) vorgegeben werden können, die nicht mit einer weiteren Pose zwischen einer anderen Bewegung synchronisiert sind.

Man erkennt, dass beispielsweise durch die wahlweise Vorgabe nicht synchronisierter Posen $q1\_2$, $q2\_2$ und $q2\_4$ die Bewegungen der Roboterachsen $q1$, $q2$ verändert werden können, ohne dass hierzu wie bisher entsprechende synchrone Dummy-Posen in der Bewegung insbesondere der Roboterachse $q3$ vorgegeben werden müssen. Ohne solche Dummy-Posen, deren Vorgabe aufwändig und fehleranfällig ist, kann die Bewegung der Roboterachse $q3$ insbesondere flexibler und damit besser optimiert werden.

Rein exemplarisch sei eine Implementierung erläutert: die drei Bewegungen können beispielsweise zunächst über Bahnparameter $sj$ vorgegeben werden, auf denen die Spline-Funktionen definiert sind:

$$qj = q(sj)$$

Dann können diese Bahnparameter sj so bestimmt werden, dass die vorgegebenen zu synchronisierenden Posen zur gleichen Zeit vorliegen:

$$sj(t) \text{ so, dass } qj(sj(Ti)) = qk\_i \text{ für } (i, k) = \{1, 2, 3\};$$

Auf diese Weise können durch die globale Vorgabe der Bewegungen auf Basis von Spline-Funktionen wahlweise weitere Posen vorgegeben werden. Sollen diese synchronisiert werden, kann dies durch zusätzliche Bedingungen wie vorstehend ausgeführt realisiert werden, ohne dass wieder von Anfang abschnittsweise vorwärtsschreitend synchronisiert und dabei Dummy-Posen vorgegeben werden müssen. Gleichermaßen können bestehende Synchronisationen aufgehoben werden. Insbesondere können unter Beibehaltung der äußeren Synchronisierung wahlweise zwischen den äußeren Posenpaaren weitere Posen vorgegeben werden, die nicht mit einer weiteren Pose einer Bewegung einer anderen Roboterachse synchronisiert sind.

Man erkennt, dass zusätzlich für zu synchronisierende Posen keine Genauhalte vorgegeben werden müssen - vielmehr kann in den Synchronisationszeitpunkten Ti,... eine von Null verschiedene Bahngeschwindigkeit $d(sj)/dt$ vorhanden sein, insbesondere vorgegeben werden.

Bezugszeichenliste

$qi\_j$   Pose j der Roboterachse i

**Patentansprüche**

1. Computerprogramm zum globalen Vorgeben einer Bewegung einer Roboterachsanordnung und einer Bewegung wenigstens einer weiteren Roboterachsanordnung,
wobei das Computerprogramm dazu eingerichtet ist, ein Posenpaar ($\mathbf{q}1\_0$; $\mathbf{q}1\_4$) der Bewegung der Roboterachsanordnung und ein Posenpaar ($\mathbf{q}2\_0$, $\mathbf{q}3\_0$; $\mathbf{q}2\_5$, $\mathbf{q}3\_3$) der Bewegung wenigstens einer weiteren Roboterachsanordnung zu synchronisieren und
unter Beibehaltung dieser Synchronisierung wahlweise zwischen einem dieser Posenpaare wenigstens eine weitere Pose ($\mathbf{q}1\_2$, $\mathbf{q}2\_2$, $\mathbf{q}2\_4$) vorzugeben, die nicht mit einer weiteren Pose zwischen dem hiermit synchronisierten Posenpaar synchronisiert ist.

2. Computerprogramm nach dem vorhergehenden Anspruch, **dadurch gekennzeichnet, dass** eine Roboterachsanordnung, insbesondere ausschließlich, eine oder mehrere, insbesondere vordere und/oder hintere, Achsen eines oder mehrerer Roboter aufweist.

3. Computerprogramm nach einem der vorhergehenden Ansprüche, **dadurch gekennzeichnet, dass** das Computerprogramm dazu eingerichtet ist, eine Bewegung global, insbesondere auf Basis wenigstens einer Spline-Funktion, zwischen einer Anfangs- und einer Endpose ($\mathbf{q}1\_0$, $\mathbf{q}2\_0$, $\mathbf{q}3\_0$; $\mathbf{q}1\_4$, $\mathbf{q}2\_5$, $\mathbf{q}3\_3$) vorzugeben.

4. Computerprogramm nach dem vorhergehenden Anspruch, **dadurch gekennzeichnet, dass** das Posenpaar dieser Bewegung dieser Anfangs- und Endpose entspricht oder zwischen dieser Anfangs- und Endpose angeordnet ist.

5. Computerprogramm nach einem der vorhergehenden Ansprüche, **dadurch gekennzeichnet, dass** das Computerprogramm dazu eingerichtet ist, wahlweise eine Synchronisation zwischen Posenpaaren der Bewegungen von wenigstens zwei Roboterachsanordnungen zu modifizieren und/oder Posen der Bewegungen von wenigstens zwei Roboterachsanordnungen zu synchronisieren.

6. Computerprogramm nach einem der vorhergehenden Ansprüche, **dadurch gekennzeichnet, dass** das Computerprogramm dazu eingerichtet ist, Posen zu synchronisieren, an denen kein Genauhalt der Roboterachsanordnungen vorgegeben wird.

**7.** Verfahren zum globalen Vorgeben einer Bewegung einer Roboterachsanordnung und einer Bewegung wenigstens einer weiteren Roboterachsanordnung mittels eines Computerprogramms nach einem der vorhergehenden Ansprüche, wobei ein Posenpaar der Bewegung der Roboterachsanordnung und ein Posenpaar der Bewegung wenigstens einer weiteren Roboterachsanordnung synchronisiert wird, **dadurch gekennzeichnet, dass** unter Beibehaltung dieser Synchronisierung wahlweise zwischen einem dieser Posenpaare wenigstens eine weitere Pose vorgebbar ist, die nicht mit einer weiteren Pose zwischen wenigstens einem anderen Posenpaar synchronisiert ist.

**8.** Computer, der zur Ausführung eines Computerprogramms nach einem der Ansprüche 1 bis 6 eingerichtet ist.

**9.** Speichermedium, auf dem ein Computerprogramm nach einem der Ansprüche 1 bis 6 gespeichert ist.

**Claims**

**1.** A computer program for globally specifying a movement of a robot axis assembly and a movement of at least one further robot axis assembly,
wherein the computer program is arranged to synchronize a pair of poses (q1_0; q1_4) of the movement of the robot axis assembly and a pair of poses (q2_0, q3_0; q2_5, q3_3) of the movement of at least one further robot axis assembly, and
while this synchronization is being maintained, to selectively specify at least one further pose (q1_2, q2_2, q2_4) between one of these pairs of poses, which pose is not synchronised with a further pose between the thus synchronised pair of poses.

**2.** The computer program according to the preceding claim, **characterised in that** a robot axis assembly comprises, in particular exclusively, one or more axes of one or more robots, in particular front and / or rear axes.

**3.** The computer program according to any one of the preceding claims, **characterised in that** the computer program is arranged to specify a movement globally, in particular on the basis of at least one spline function, between an initial pose and an end pose (q1_0, q2_0, q3_0; q1_4, q2_5, q3_3).

**4.** The computer program according to the preceding claim, **characterised in that** the pair of poses of said movement corresponds to said initial pose and said end pose or is arranged between said initial pose and said end pose.

**5.** The computer program according to any one of the preceding claims, **characterised in that** the computer program is arranged to selectively modify a synchronization between pairs of poses of the movements of at least two robot axis assemblies and / or to synchronize poses of the movements of at least two robot axis assemblies.

**6.** The computer program according to any one of the preceding claims, **characterised in that** the computer program is arranged to synchronize poses at which no exact stop of the robot axis assemblies is specified.

**7.** A method of globally specifying a movement of a robot axis assembly and a movement of at least one further robot axis assembly by means of a computer program according to any one of the preceding claims,
wherein a pair of poses of the movement of the robot axis assembly and a pair of poses of the movement of at least one further robot axis assembly are synchronised, **characterised in that**, while this synchronization is being maintained, at least one further pose, which is not synchronised with a further pose between at least one further pair of poses, can selectively be specified between one of these pairs of poses.

**8.** A computer which is arranged to execute a computer program according to any one of the claims 1 to 6.

**9.** A storage medium on which a computer program according to any one of the claims 1 to 6 is stored.

**Revendications**

**1.** Programme d'ordinateur pour la prédétermination globale d'un mouvement d'un agencement d'axes de robot et d'un mouvement d'au moins un autre agencement d'axes de robot,
dans lequel le programme d'ordinateur est conçu pour synchroniser une paire de poses (**q1**_0 ; **q**1_4) du mouvement de l'agencement d'axes de robot et une paire de poses (**q**2_0, **q**3_0 ; **q**2_5, **q**3_3) du mouvement d'au moins un autre agencement d'axes de robot et
en conservant cette synchronisation, prédéterminer au choix, entre une de ces paires de poses, au moins une autre pose ($q1\_2$, $q2\_2$, $q2\_4$) qui n'est pas synchronisée avec une autre pose entre la paire de poses synchronisées avec celle-ci.

2. Programme d'ordinateur selon la revendication précédente, **caractérisé en ce qu'**un agencement d'axes de robot comprend, en particulier exclusivement, un ou plusieurs axes, en particulier des axes avant et/ou arrière, d'un ou de plusieurs robots.

3. Programme d'ordinateur selon l'une quelconque des revendications précédentes, **caractérisé en ce que** le programme d'ordinateur est conçu pour prédéterminer un mouvement d'une manière globale, en particulier sur la base d'au moins une fonction spline, entre une pose initiale et une pose finale ($q1\_0$, $q2\_0$, $q3\_0$ ; $q1\_4$, $q2\_5$, $q3\_3$).

4. Programme d'ordinateur selon la revendication précédente, **caractérisé en ce que** la paire de poses de ce mouvement correspond à ces poses initiale et finale ou est disposée entre ces poses initiale et finale.

5. Programme d'ordinateur selon l'une quelconque des revendications précédentes, **caractérisé en ce que** le programme d'ordinateur est conçu pour modifier au choix une synchronisation entre des paires de poses des mouvements d'au moins deux agencements d'axes de robot et/ou pour synchroniser des poses des mouvements d'au moins deux agencements d'axes de robot.

6. Programme d'ordinateur selon l'une quelconque des revendications précédentes, **caractérisé en ce que** le programme d'ordinateur est conçu pour synchroniser des poses pour lesquelles aucun arrêt précis des agencements d'axes de robot n'est prédéterminé.

7. Procédé de prédétermination globale d'un mouvement d'un agencement d'axes de robot et d'un mouvement d'au moins un autre agencement d'axes de robot au moyen d'un programme d'ordinateur selon l'une quelconque des revendications précédentes,
dans lequel une paire de poses du mouvement de l'agencement d'axes de robot et une paire de poses du mouvement d'au moins un autre agencement d'axes de robot sont synchronisées, **caractérisé en ce que**, en conservation cette synchronisation, il est possible de prédéterminer au choix parmi une de ces paires de poses au moins une autre pose qui n'est pas synchronisée avec une autre pose parmi au moins une autre paire de poses.

8. Ordinateur qui est conçu pour l'exécution d'un programme d'ordinateur selon l'une quelconque des revendications 1 à 6.

9. Support d'informations sur lequel est stocké un programme d'ordinateur selon l'une quelconque des revendications 1 à 6.

## Fig. 1A

## Fig. 1B

## Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040199290 A1